# EUROPEAN PATENT SPECIFICATION

(11) **EP 2 806 145 B1**
(45) Date of publication and mention of the grant of the patent: **26.06.2024**
(21) Application number: 13169212.1
(22) Date of filing: 24.05.2013
(51) Int. Cl.: F02D 41/30, F02D 35/02, F02D 41/34, F02D 41/00

(54) **Method of operating a gas or dual fuel engine**
Verfahren zum Betreiben eines Gas- oder Zweistoffmotors
Procédé de fonctionnement d'un moteur à deux combustibles ou à gaz

(43) Date of publication of application: 26.11.2014
(73) Proprietor: Caterpillar Motoren GmbH & Co. KG, 24159 Kiel (DE)
(72) Inventor: Sixel, Eike Joachim, 24109 Kiel (DE); Ritscher, Bert, 24159 Kiel (DE); Schmidt, Andre, 18147 Rostock (DE)
(74) Representative: Novagraaf Group

(56) References cited:
- EP-A2- 1 559 887
- WO-A1-2012/021096
- JP-A- H1 150 878
- US-A1- 2002 078 918
- US-A1- 2012 089 315

## Description

### Technical Field

The present disclosure generally relates to an internal combustion engine and a method of operating the same, in particular, to a method of preventing pre-ignition of a mixture of air and gas in a gas or dual fuel engine.

### Background

Pre-ignition may occur in spark-ignited or compression-ignited gas or dual fuel engines with high BMEP. Pre-ignition is a self-ignition process of a mixture of gas and air in a combustion chamber of such an engine. Pre-ignition may occur at high engine loads and/or high temperatures. The occurrence of pre-ignition may be influenced by the presence of lube oil in the combustion chamber or the gas quality. Pre-ignition of the mixture of gas and air may result in very high cylinder pressures and may potentially damage the engine.

In an effort to prevent pre-ignition from occurring, US 6,883,497 B2 discloses an electronic engine management method for an internal combustion engine. In this management method, a spark generated by a spark plug is retarded when a related engine condition is identified. A controller determines whether auto-ignition was detected after retarding the spark. The controller may take corrective measures to remedy auto-ignition conditions.

WO 2012/021096 A1 relates to a method for controlling fuel injection in an internal combustion engine provided in a vehicle. The method comprises the steps of providing means for detecting start of combustion, determining in injection start delay period being a time period from injection start pulse to the start of combustion, comparing the determined injection start delay period with a stored reference value, and establishing that a change of fuel has taken place if the difference between the determined injection start delay period and the reference value is greater than a predetermined value.

US 2012/0089315 A1 discloses a pre-ignition estimation/control device for an internal combustion engine.

EP 1 559 887 A2 relates to a method and apparatus for controlling pilot fuel injection to minimize NOx and HC emissions.

JP H11 50878 A relates to a control device for an internal combustion engine.

US 2002/0078918 A1 discloses a method and apparatus for introducing gaseous fuel into a piston cylinder of an operating internal combustion engine in two separate stages. Initiation and duration for at least one of the two stages is variable in response to at least one of engine load and engine speed.

The present disclosure is directed, at least in part, to improving or overcoming one or more aspects of prior systems.

### Summary of the Disclosure

According to one aspect of the present disclosure, a method of operating a gas or dual fuel engine having at least one cylinder and a gas admission valve associated with the at least one cylinder comprises monitoring a characteristic of the at least one cylinder during operation of the gas or dual fuel engine. The method further comprises determining a start of combustion in the at least one cylinder from the monitored characteristic, determining a time difference between the start of combustion and an ignition timing associated with the at least one cylinder, and reducing an opening duration of the gas admission valve when the time difference is less than a predetermined threshold at which pre-ignition is likely to occur.

According to another aspect of the present disclosure, a gas or dual fuel engine comprises at least one cylinder, a gas admission valve associated with the at least one cylinder for supplying a gaseous fuel to a combustion chamber of the at least one cylinder, a sensor associated with the at least one cylinder, the sensor being configured to detect a characteristic of the at least one cylinder during operation of the gas or dual fuel engine, and a control unit for receiving a detection result from the sensor. The control unit is configured to monitor the characteristic of the at least one cylinder during operation of the gas or dual fuel engine, determine a start of combustion in the at least one cylinder based on the monitored characteristic, determine a time difference between the start of combustion and an ignition timing associated with the at least one cylinder, and reduce an opening duration of the gas admission valve when the time difference is less than a predetermined threshold at which pre-ignition is likely to occur.

In yet another aspect of the present disclosure, a computer program comprises computer-executable instructions which, when run on the control unit of the engine (10), cause the control unit to perform the steps of monitoring a characteristic of the least one cylinder during operation of a gas or dual fuel engine, determining a start of combustion in the at least one cylinder from the monitored characteristic, determining a time difference between the start of combustion and an ignition timing associated with the at least one cylinder, and reducing an opening duration of the gas admission valve when the time difference is less than a predetermined threshold.

Other features and aspects of the present disclosure will be apparent from the following description and the accompanying drawings.

### Brief Description of the Drawings

Fig. 1 is a schematic view of an exemplary internal combustion engine according to the present disclosure;
Fig. 2 is a schematic view of a system for preventing pre-ignition in a cylinder of the internal combustion engine of Fig.1 according to the present disclosure; and
Fig. 3 is a schematic diagram illustrating thresholds used in an exemplary control strategy according to the present disclosure.

### Detailed Description

The following is a detailed description of exemplary embodiments of the present disclosure. The exemplary embodiments described herein are intended to teach the principles of the present disclosure, enabling those of ordinary skill in the art to implement and use the present disclosure in many different environments and for many different applications. Therefore, the exemplary embodiments are not intended to be, and should not be considered as a limiting description of the scope of protection. Rather, the scope of protection shall be defined by the appended claims.

The present disclosure may be based in part on the realization that pre-ignition in a cylinder of an internal combustion engine may be characterized by a quick moving of a start of combustion (SOC) in the combustion chamber of the cylinder to earlier timings. A fully developed pre-ignition may be characterized by a SOC that is before the ignition timing or start of injection (SOI) of the associated engine. When pre-ignition begins to occur, the SOC moves toward the SOI or the ignition timing. The present disclosure may be based in part on the realization that this can be observed by an associated control system.

According to the present disclosure, the associated control system may reduce the load of the cylinder for which the beginning pre-ignition is detected, for example, by reducing the amount of gas that is supplied to the affected cylinder. A speed governor may be configured to increase the gas supply to the other cylinders to offset the reduced power of the affected cylinder.

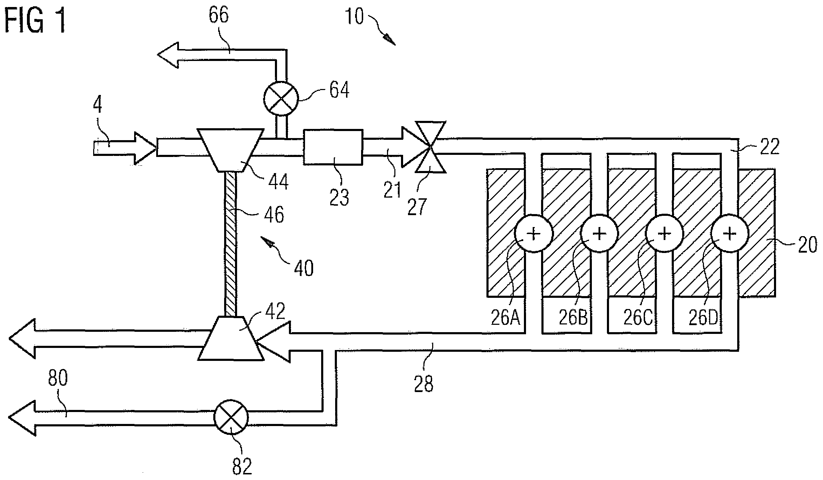

Referring now to the drawings, an exemplary embodiment of an internal combustion engine 10 is illustrated in Fig. 1. Internal combustion engine 10 may include features not shown, such as fuel systems, air systems, cooling systems, peripheries, drive train components, etc. For the purposes of the present disclosure, internal combustion engine 10 is a gaseous fuel internal combustion engine. One skilled in the art will recognize, however, that internal combustion engine 10 may be any type of internal combustion engine, for example, a dual fuel engine or any other Otto or diesel internal combustion engine that utilizes a mixture of gaseous fuel and air for combustion.

Internal combustion engine 10 may be of any size, with any number of cylinders and in any configuration ("V", "in-line", etc.). Internal combustion engine 10 may be used to power any machine or other device, including ships or other marine applications, locomotive applications, on-highway trucks or vehicles, off-highway machines, earth-moving equipment, generators, aerospace applications, pumps, stationary equipment such as power plants, or other engine-powered applications.

Still referring to Fig. 1, internal combustion engine 10 comprises an engine block 20 including a bank of cylinders 26A-26D, at least one fuel tank (not shown), a turbocharger 40 associated with cylinders 26A-26D, and an intake manifold 22.

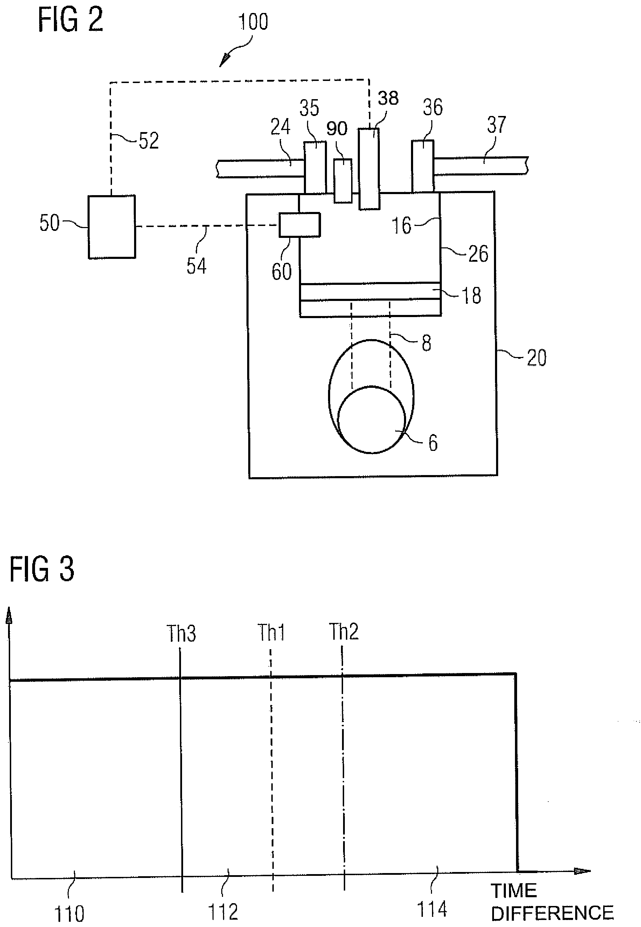

Engine block 20 includes a crank-case (not shown) within which a crank-shaft 6 (see Fig. 2) is supported. Crank-shaft 6 is connected to pistons 18 (see Figs. 2) that are movable within each of cylinders 26A-26D during operation of internal combustion engine 10.

Intake manifold 22 is fluidly connected to each of cylinders 26A-26D. Each of cylinders 26A-26D is provided with at least one inlet valve 35 (see Fig. 2) that is adapted to open or close a fluid connection between an intake port 24 and a corresponding combustion chamber 16 of cylinders 26A-26D.

An exhaust manifold 28 is connected to each of cylinders 26A-26D. Each of cylinders 26A-26D is provided with at least one exhaust valve 36 disposed in an exhaust passage 37 (see Fig. 2) and being configured to open and close a fluid connection between combustion chamber 16 of each cylinder 26A-26D and exhaust manifold 28.

Generally, when internal combustion engine 10 is operated, a mixture of gaseous fuel and air (in the following referred to as the "mixture") is introduced into the combustion chambers of the plurality of cylinders 26A-26D via an air inlet 4, intake manifold 22 and inlet valves 35, which supply compressed intake air, and gas admission valves 38 (see Fig. 2), which supply gaseous fuel. After combustion, exhaust gases generated by the combustion process are released from cylinders 26A-26D through exhaust manifold 28.

Turbocharger 40 is configured to use the heat and pressure of the exhaust gas of internal combustion engine 10 to drive a compressor 44 for compressing the intake air prior to being supplied to the engine. Specifically, exhaust gas passing a turbine 42 of turbocharger 40 rotates turbine 42, thereby decreasing in pressure and temperature. Compressor 44 is rotatably connected to turbine 42 via a common shaft 46 and driven by turbine 42.

Generally, an outlet of compressor 44 is fluidly connected to an inlet of intake manifold 22 via a compressor connection 21. As shown in Fig. 1, an outlet of compressor 44 is connected to the inlet of intake manifold 22 via a cooler 23. A throttle valve 27 arranged downstream of cooler 23 is configured to open or close the fluid connection between compressor connection 21 and intake manifold 22, thereby enabling or restricting a flow of the compressed intake air from compressor connection 21 into intake manifold 22.

During operation of internal combustion engine 10, the intake air is compressed and cooled before being supplied to cylinders 26A-26D. Within cylinders 26A-26D, further compression and heating of the mixture may be caused by movement of pistons 18 (see Fig. 2). Then, the mixture within the cylinders 26A-26D may be ignited, either by using a spark plug or a pilot injection of liquid fuel to initiate the combustion of the mixture at a predetermined ignition timing. It should be noted that herein the term "ignition timing" is used for the timing of the spark in case a spark plug is used as well as for the start of injection of the pilot fuel by the pilot fuel injector in case the latter is used for igniting the mixture. The produced exhaust gas is discharged via exhaust manifold 28. An outlet of exhaust manifold 28 is fluidly connected to an inlet of turbine 42. An outlet of turbine 42 may be fluidly connected to, for example, an exhaust gas treatment system (not shown).

In some embodiments, as indicated in Fig. 1, internal combustion engine 10 may be provided with a waste gate system including a waste gate connection 80 and a waste gate valve 82. Additionally, internal combustion engine 10 may include a blow-off system including a blow-off connection 66 and a blow-off valve 64. It should be appreciated that blow-off connection 66 and blow-off valve 64 may be provided with different configurations than the one shown in Fig. 1, if appropriate. Alternatively, one or more of these components may be omitted.

Turning now to Fig. 2, an exemplary embodiment of a control system 100 for preventing pre-ignition in a cylinder 26 of combustion engine 10 is illustrated. The person skilled in the art will recognize that the exemplary cylinder 26 shown in Fig. 2 may demonstrate the principles of the cylinders 26A-26D of Fig. 1. Therefore, the exemplary disclosed construction shown in Fig. 2 may also apply to the cylinders 26A-26D shown in Fig. 1.

Fig. 2 shows a schematic cross-sectional view of cylinder 26. Control system 100 is associated with cylinder 26. Cylinder 26 defines a combustion chamber 16 and includes a piston 18. Crank-shaft 6 is connected to piston 18 via piston rod 8. Piston 18 is configured to reciprocate within cylinder 26.

Cylinder 26 is connected to intake manifold 22 (Fig. 1) via intake passage 24 and to exhaust manifold 28 via exhaust passage 37. Inlet valve 35 is disposed in intake passage 24, and exhaust valve 36 is disposed in exhaust passage 37. A gas admission valve 38 is provided to supply gaseous fuel to combustion chamber 16 of cylinder 26.

Inlet valve 35 is configured to supply compressed intake air to combustion chamber 16. Exhaust valve 36 is configured to discharge exhaust from combustion chamber 16 to exhaust manifold 28 after combustion.

An ignition device 90 is configured to ignite the mixture of fuel and air inside combustion chamber 16 at a desired ignition timing. In some embodiments, ignition device 90 may be a spark plug. In other exemplary embodiments, ignition device 90 may be a pilot injector configured to inject a pilot amount of, for example, diesel fuel to ignite the mixture.

Control system 100 includes a sensor 60 associated with cylinder 26. Sensor 60 may be disposed at least in part within combustion chamber 16. Sensor 60 is configured to detect a characteristic of cylinder 26. In some embodiments, sensor 60 may be a pressure sensor configured to detect a cylinder pressure in cylinder 26. In other embodiments, a different characteristic may be detected by sensor 60. For example, a combustion sensor may be configured to detect a flame front of a combustion in cylinder 26. Sensor 60 may be any known pressure sensor and may be configured to detect the pressure within combustion chamber 16 in a known manner. In other embodiments, sensor 60 may be configured to detect temperature fluctuations within combustion chamber 16 or other characteristics from which a start of combustion in combustion chamber 60 can be determined.

Control system 100 further includes a control unit 50. Control unit 50 is connected to sensor 60 via a communication line 54 and to gas admission valve 38 via a communication line 52. Control unit 50 further may be connected to ignition device 90 via an additional communication line (not shown). Control unit 50 may be configured to control an ignition timing of the mixture in combustion chamber 16 via ignition device 90. Further, control unit 50 is configured to receive the results of the detection by sensor 60 and determine the characteristic of cylinder 26 detected by sensor 60.

Further, control unit 50 is configured to determine a start of combustion of the mixture of gas and air in combustion chamber 16 during operation of combustion engine 10 based on the detection result from sensor 60. In some embodiments, control unit 50 may be configured to record and analyze the cylinder pressure measurements by sensor 60 to determine the start of combustion in combustion chamber 16. For example, control unit 50 may determine the start of combustion when the measured cylinder pressure in combustion chamber 16 differs from an expected cylinder pressure during compression by a predetermined value.

Control unit 50 may be a single microprocessor or dual microprocessors that include means for controlling, among others, an operation of various components of combustion engine 10. Control unit 50 may be a general engine control unit (ECU) capable of controlling numerous functions associated with internal combustion engine 10 and/or its associated components. Control unit 50 may include all components required to run an application such as, for example, a memory, a secondary storage device, and a processor such as a central processing unit or any other means known in the art for controlling internal combustion engine 10 and its components. Various other known circuits may be associated with control unit 50, including power supply circuitry, signal conditioning circuitry, communication circuitry and other appropriate circuitry. Control unit 50 may analyze and compare received and stored data and, based on instructions and data stored in memory or input by a user, determine whether action is required. For example, control unit 50 may compare received values with the target values stored in memory, and, based on the results of the comparison, transmit signals to one or more components to alter the operation status of the same.

Control unit 50 may include any memory device known in the art for storing data relating to operation of internal combustion engine 10 and its components. The data may be stored in the form of one or more maps that describe and/or relate, for example, the detection results from sensor 60 to the start of combustion in combustion chamber 16 of cylinder 26. Each of the maps may be in the form of tables, graphs and/or equations, and may include a compilation of data collected from lab and/or field operation of internal combustion engine 10. The maps may be generated by performing instrumented tests on the operation of internal combustion engine 10 under various operating conditions while varying parameters associated therewith or performing various measurements. Control unit 50 may reference these maps and control operation of one component in response to the desired operation of another component. For example, the maps may contain data on the required reduction of the opening duration of gas admission valve 38 when the start of combustion approaches the ignition timing, for example, the start of injection by the associated pilot injector.

In particular, control unit 50 may be configured to determine a time difference between the start of combustion SOC and the ignition timing for cylinder 26, for example, the start of injection SOI of the pilot injector, and to adjust the opening duration of gas admission valve 38 based on this time difference. A corresponding map relating the adjustment of gas admission valve 38 and this time difference may be stored, for example, in control unit 50. In particular, control unit may be configured to reduce the opening duration of gas admission valve 38 when the time difference is less than a predetermined threshold. It should be noted that any other appropriate criteria may be used to determine that the SOC approaches the SOI. For example, a crank angle at which the SOC occurs may be compared to a crank angle at which the SOI is to occur for a given cylinder, and the control unit may be configured to take appropriate countermeasures when the angular difference is less than a predetermined value. The difference in the crank angles may correspond to the time difference described herein, and it should be appreciated that the term "time difference" as used herein may also mean the corresponding difference in crank angle. Further, in other embodiments other countermeasures than reducing the opening duration of the gas admission valve may be taken to reduce the load of the cylinder. For example, a compression ratio of the intake air could be reduced, or the pressure in the intake manifold may be reduced in an appropriate manner.

Fig. 3 shows an exemplary configuration of different thresholds for controlling the opening duration of gas admission valve 38 based on the determined time difference between the start of combustion and the start of injection. For example, three regions may be defined in a corresponding map stored in control unit 50. Region 110 corresponds to an unsafe operating region where pre-ignition is likely to occur. In other words, when control unit 50 determines that the time difference between the start of combustion and the ignition timing is less than threshold Th3, control unit 50 will reduce the opening duration of gas admission valve 38 to reduce the load of cylinder 26. On the other hand, as long as the time difference is greater than a threshold Th2, the cylinder is determined to be in a safe operating region 114 in which no pre-ignition is likely to occur. Further, an intermediate region 112 may be defined between regions 110 and 114. In this intermediate region, different control strategies may be utilized by control unit 50 to determine whether the opening duration of gas admission valve 38 should be reduced or not. For example, control unit 50 may be configured to reduce the opening duration by a smaller amount (for example, with a smaller gradient or the like) when the time difference is between threshold Th2 and a threshold Th1 in intermediate region 112 than when the time difference is between threshold Th1 and Th3, for example, during a predetermined number of combustion cycles. It will appreciated that many other control strategies may be used for adjusting the opening duration of gas admission valve 38 based on the time difference between the start of combustion and the ignition timing, and that the configuration shown in Fig. 3 is only one example. For example, a single threshold could be used, or two or more than three thresholds may be used. Further, control unit 50 may be configured to analyze the start of combustion over several combustion cycles, and reduce the opening duration of gas admission valve 38 only when the detected start of combustion is below a threshold or between two thresholds for a predetermined number of combustion cycles.

In some embodiments, control unit 50 may be configured to use different thresholds Th1, Th2 and or Th3 for reducing the opening duration of gas admission valve 38 under different operating conditions of combustion engine 10. For example, different maps and/or different thresholds could be used for different engine loads. In some embodiments, the opening duration of gas admission valve 38 may be reduced less when the engine load is lower, as the risk of pre-ignition may also be lower.

In some embodiments, control unit 50 may be configured to reduce the opening duration of gas admission valve 38 proportional to the time difference between the start of combustion and the ignition timing. In other words, the smaller the time difference, the greater the reduction of the opening duration by control unit 50.

Additionally, control unit 50 may be configured to gradually increase the opening duration of gas admission valve 38 after reducing the same to thereby return the opening duration to the opening duration before the reduction. For example, a corresponding map specifying the gradual increase of the opening duration over time may be stored in the memory of control unit 50. In some embodiments, control unit 50 may be configured to increase the opening duration a predetermined time after reducing the same. In other embodiments, control unit 50 may be configured to continue monitoring the time difference between the start of combustion and the ignition timing and increase the opening duration when the time difference is greater than a predetermined threshold, for example, threshold Th1, for a predetermined number of combustion cycles.

In some embodiments, control unit may be configured to increase the opening duration of one or more gas admission valves of other cylinders of combustion engine 10 to thereby increase their power output in response to reducing the opening duration of gas admission valve 38 of cylinder 26. In this manner, the total output power by combustion engine 10 may be maintained.

As previously mentioned, combustion engine 10 may be a gas or dual fuel engine having a pilot injector for injecting a pilot fuel into combustion chamber 16 of cylinder 26. Accordingly, the ignition timing may be the start of injection of the pilot fuel by this pilot fuel injector.

During operation, control unit 50 is configured to receive the detection result from sensor 60 and determine the cylinder pressure in cylinder 26. Based on the determined cylinder pressure, control unit 50 may determine the start of combustion in cylinder 26. Using the known injection timing, for example, the start of injection of pilot fuel by the pilot fuel injector, control unit 50 may calculate a time difference between the start of combustion and the start of injection. When the time difference is less than, for example, threshold Th3, control unit 50 adjusts the opening duration of gas admission valve 38 of cylinder 26. At substantially the same time, control unit 50 may increase the opening duration of the gas admission valves for one or more of the remaining cylinders of combustion engine 10 to offset the reduction in power of cylinder 26. When control unit 50 determines in the above-described manner that it is safe to return to normal operation of cylinder 26, control unit 50 returns gas admission valve 38 and the gas admission valves of the other cylinders to their normal opening durations.

### Industrial Applicability

The industrial applicability of the systems and methods for preventing pre-ignition in a gas or dual fuel internal combustion engine described herein will be readily appreciated from the foregoing discussion. An exemplary machine suited to the disclosure is a large internal combustion engine such as the engines of the series M46DF, GCM46, GCM34, M32DF, M34DF, M3x manufactured by Caterpillar Motoren GmbH & Co. KG, Kiel, Germany. Similarly, the systems and methods described herein can be adapted to a large variety of other internal combustion engines used for various different tasks.

It will be appreciated that the foregoing description provides examples of the disclosed systems and methods. However, it is contemplated that other implementations of the disclosure may differ in detail from the foregoing examples. All references to the disclosure or examples thereof are intended to reference the particular example being discussed at that point and are not intended to imply any limitation as to the general disclosure.

Recitation of ranges of values herein are merely intended to serve as a shorthand method for referring individually to each separate value falling within the range, unless otherwise indicated herein, and each separate value is incorporated into the specification as if it were individually recited herein.

Although the preferred embodiments of the present disclosure have been described herein, improvements and modifications may be incorporated without departing from the scope of the following claims.

## Claims

1. A method of operating a gas or dual fuel engine (10) having at least one cylinder (26) and a gas admission valve (38) associated with the at least one cylinder (26), the method comprising:
monitoring a characteristic of the at least one cylinder (26) during operation of the gas or dual fuel engine (10);
determining a start of combustion in the at least one cylinder (26) from the monitored characteristic, the start of combustion being after an ignition timing associated with the at least one cylinder (26);
the method being **characterised in** determining a time difference between the start of combustion in the at least one cylinder (26) and the ignition timing associated with the at least one cylinder (26); and
reducing the opening duration of the gas admission valve (38) when the time difference is less than a predetermined threshold (Th3) at which pre-ignition is likely to occur.

2. The method of claim 1, wherein the time difference corresponds to a difference between a crank angle associated with the start of combustion and a crank angle associated with the ignition timing for the at least one cylinder (26).

3. The method of claim 1 or 2, further including:
determining a load of the gas or dual fuel engine (10); and
adjusting the predetermined threshold based on the determined load.

4. The method of any one of claims 1 to 3, further including reducing the opening duration of the gas admission valve (38) when the time difference is less than the predetermined threshold for a predetermined number of combustion cycles.

5. The method of any one of claims 1-4, further including reducing the opening duration of the gas admission valve (38) by an amount that is proportional to the time difference.

6. The method of any one of claims 1-5, further including gradually increasing the opening duration of the gas admission valve (38) after reducing the same to thereby return the opening duration to the opening duration before the reduction.

7. The method of any one of claims 1-6, further including increasing the opening duration of the gas admission valve (38) a predetermined time after reducing the same or when the time difference is greater than the predetermined threshold for a predetermined number of combustion cycles.

8. The method of any one of claims 1-7, further including increasing an opening duration of at least one other gas admission valve associated with at least one other cylinder of the gas or dual fuel engine to offset the reduction in power of the at least one cylinder (26).

9. The method of any one of claims 1-8, wherein the gas or dual fuel engine (10) includes a pilot injector (90) for injecting a pilot fuel into the at least one cylinder (26), and the ignition timing is a start of injection by the pilot injector (90).

10. The method of any one of claims 1-9, wherein the step of monitoring the characteristic of the at least one cylinder (26) includes monitoring a cylinder pressure of the at least one cylinder (26).

11. A gas or dual fuel engine (10) comprising:
at least one cylinder (26);
a gas admission valve (38) associated with the at least one cylinder (26) for supplying a gaseous fuel to a combustion chamber (16) of the at least one cylinder (26);
a sensor (60) associated with the at least one cylinder (26), the sensor (60) being configured to detect a characteristic of the at least one cylinder (26) during operation of the gas or dual fuel engine (10); and
a control unit (50) for receiving a detection result from the sensor (60),
wherein the control unit (50) is configured to:
monitor the characteristic of the at least one cylinder (26) during operation of the gas or dual fuel engine (10);
determine a start of combustion in the at least one cylinder (26) based on the monitored characteristic, the start of combustion being after an ignition timing associated with the at least one cylinder (26);
**characterised in that** the control unit is configured to determine a time difference between the start of combustion in the at least one cylinder (26) and the ignition timing associated with the at least one cylinder (26); and
reduce the opening duration of the gas admission valve (38) when the time difference is less than a predetermined threshold (Th3) at which pre-ignition is likely to occur.

12. The gas or dual fuel engine (10) of claim 11, wherein the sensor (60) is configured to detect a cylinder pressure of the at least one cylinder (26), and the control unit (50) is configured to determine the start of combustion in the at least one cylinder (26) based on the detected cylinder pressure.

13. The gas or dual fuel engine of claim 11 or 12, further comprising a pilot injector (90) for injecting a pilot fuel into the combustion chamber (16) of the at least one cylinder (26), wherein the control unit (50) is configured to determine a time difference between the determined start of combustion and a start of injection of pilot fuel by the pilot injector (90), and reduce an opening duration of the gas admission valve (38) when the time difference is less than a predetermined threshold.

14. A computer program comprising computer-executable instructions which, when run on the control unit (50) of the engine (10) of claim 11, cause the control unit (50) to perform the steps of the method of any one of claims 1-10.

## Patentansprüche

1. Verfahren zum Betreiben eines Gas- oder Zweistoffmotors (10), der mindestens einen Zylinder (26) und ein Gaseinlassventil (38) aufweist, das mit dem mindestens einen Zylinder (26) verknüpft ist, das Verfahren umfassend:
Überwachen eines Merkmals des mindestens einen Zylinders (26) während eines Betriebs des Gas- oder Zweistoffmotors (10);
Bestimmen eines Verbrennungsbeginns in dem mindestens einen Zylinder (26) aus dem überwachten Merkmal, wobei der Verbrennungsbeginn nach einem Zündzeitpunkt ist, der mit dem mindestens einen Zylinder (26) verknüpft ist;
wobei das Verfahren **dadurch gekennzeichnet ist, dass** es eine Zeitdifferenz zwischen dem Verbrennungsbeginn in dem mindestens einen Zylinder (26) und dem Zündzeitpunkt bestimmt, der mit dem mindestens einen Zylinder (26) verknüpft ist; und
Reduzieren der Öffnungsdauer des Gaseinlassventils (38), wenn die Zeitdifferenz kleiner als ein zuvor bestimmter Schwellenwert (Th3) ist, bei dem eine Vorentflammung wahrscheinlich auftritt.

2. Verfahren nach Anspruch 1, wobei die Zeitdifferenz einer Differenz zwischen einem Kurbelwinkel, der mit dem Verbrennungsbeginn verknüpft ist, und einem Kurbelwinkel entspricht, der mit dem Zündzeitpunkt für den mindestens einen Zylinder (26) verknüpft ist.

3. Verfahren nach Anspruch 1 oder 2, das ferner einschließt:
Bestimmen einer Last des Gas- oder Zweistoffmotors (10); und Anpassen des zuvor bestimmten Schwellenwerts basierend auf der bestimmten Last.

4. Verfahren nach einem der Ansprüche 1 bis 3, das ferner das Reduzieren der Öffnungsdauer des Gaseinlassventils (38) einschließt, wenn die Zeitdifferenz für eine zuvor bestimmte Anzahl von Verbrennungszyklen kleiner als der zuvor bestimmte Schwellenwert ist.

5. Verfahren nach einem der Ansprüche 1 bis 4, das ferner das Reduzieren der Öffnungsdauer des Gaseinlassventils (38) um einen Betrag einschließt, der zu der Zeitdifferenz proportional ist.

6. Verfahren nach einem der Ansprüche 1 bis 5, das ferner ein allmähliches Erhöhen der Öffnungsdauer des Gaseinlassventils (38) einschließt, nachdem diese reduziert wurde, um dadurch die Öffnungsdauer auf die Öffnungsdauer vor der Reduzierung zurückzuführen.

7. Verfahren nach einem der Ansprüche 1 bis 6, das ferner das Erhöhen der Öffnungsdauer des Gaseinlassventils (38) eine zuvor bestimmte Zeit nach dem Reduzieren dieser oder, wenn die Zeitdifferenz für eine zuvor bestimmte Anzahl von Verbrennungszyklen größer als der zuvor bestimmte Schwellenwert ist, einschließt.

8. Verfahren nach einem der Ansprüche 1 bis 7, das ferner das Erhöhen einer Öffnungsdauer mindestens eines anderen Gaseinlassventils einschließt, das mit mindestens einem anderen Zylinder des Gas- oder Zweistoffmotors verknüpft ist, um die Leistungsreduktion des mindestens einen Zylinders (26) auszugleichen.

9. Verfahren nach einem der Ansprüche 1 bis 8, wobei der Gas- oder Zweistoffmotor (10) eine Piloteinspritzdüse (90) zum Einspritzen eines Pilotkraftstoffs in den mindestens einen Zylinder (26) einschließt und der Zündzeitpunkt ein Einspritzbeginn durch die Piloteinspritzdüse (90) ist.

10. Verfahren nach einem der Ansprüche 1 bis 9, wobei der Schritt des Überwachens des Merkmals des mindestens einen Zylinders (26) das Überwachen eines Zylinderdrucks des mindestens einen Zylinders (26) einschließt.

11. Gas- oder Zweistoffmotor (10), umfassend:
mindestens einen Zylinder (26);
ein Gaseinlassventil (38), das mit dem mindestens einen Zylinder (26) zum Zuführen eines gasförmigen Kraftstoffs einer Verbrennungskammer (16) des mindestens einen Zylinders (26) verknüpft ist;
einen Sensor (60), der mit dem mindestens einen Zylinder (26) verknüpft ist, wobei der Sensor (60) konfiguriert ist, um ein Merkmal des mindestens einen Zylinders (26) während des Betriebs des Gas- oder Zweistoffmotors (10) zu erfassen; und
ein Steuergerät (50) zum Empfangen eines Erfassungsergebnisses von dem Sensor (60),
wobei das Steuergerät (50) ferner konfiguriert ist zum:
Überwachen des Merkmals des mindestens einen Zylinders (26) während des Betriebs des Gas- oder Zweistoffmotors (10);
Bestimmen eines Verbrennungsbeginns in dem mindestens einen Zylinder (26) basierend auf dem überwachten Merkmal, wobei der Verbrennungsbeginn nach einem Zündzeitpunkt ist, der mit dem mindestens einen Zylinder (26) verknüpft ist;
**dadurch gekennzeichnet, dass** das Steuergerät konfiguriert ist, um eine Zeitdifferenz zwischen dem Verbrennungsbeginn in dem mindestens einen Zylinder (26) und dem Zündzeitpunkt zu bestimmen, der mit dem mindestens einen Zylinder (26) verknüpft ist; und
Reduzieren der Öffnungsdauer des Gaseinlassventils (38), wenn die Zeitdifferenz kleiner als ein zuvor bestimmter Schwellenwert (Th3) ist, bei dem die Vorentflammung wahrscheinlich auftritt.

12. Gas- oder Zweistoffmotor (10) nach Anspruch 11, wobei der Sensor (60) konfiguriert ist, um einen Zylinderdruck des mindestens einen Zylinders (26) zu erfassen, und das Steuergerät (50) konfiguriert ist, um den Verbrennungsbeginn in dem mindestens einen Zylinder (26) basierend auf dem erfassten Zylinderdruck zu bestimmen.

13. Gas- oder Zweistoffmotor nach Anspruch 11 oder 12, ferner umfassend eine Piloteinspritzdüse (90) zum Einspritzen eines Pilotkraftstoffs in die Verbrennungskammer (16) des mindestens einen Zylinders (26), wobei das Steuergerät (50) konfiguriert ist, um eine Zeitdifferenz zwischen dem bestimmten Verbrennungsbeginn und einem Einspritzbeginn von Pilotkraftstoff durch die Piloteinspritzdüse (90) zu bestimmen und eine Öffnungsdauer des Gaseinlassventils (38) zu reduzieren, wenn die Zeitdifferenz kleiner als ein zuvor bestimmter Schwellenwert ist.

14. Computerprogramm, umfassend computerausführbare Anweisungen, die, wenn sie auf dem Steuergerät (50) des Motors (10) nach Anspruch 11 ablaufen, das Steuergerät (50) veranlassen, die Schritte des Verfahrens nach einem der Ansprüche 1 bis 10 durchzuführen.

## Revendications

1. Procédé de fonctionnement d'un moteur à gaz ou à bicarburation (10) possédant au moins un cylindre (26) et une soupape d'admission de gaz (38) associée à l'au moins un cylindre (26), le procédé comprenant :
la surveillance d'une caractéristique de l'au moins un cylindre (26) pendant le fonctionnement du moteur à gaz ou à bicarburation (10) ;
la détermination d'un début de combustion dans l'au moins un cylindre (26) à partir de la caractéristique surveillée, le début de combustion étant après un calage d'allumage associé à l'au moins un cylindre (26) ;
le procédé est **caractérisé en** la détermination d'une différence de temps entre le début de combustion dans l'au moins un cylindre (26) et le calage d'allumage associé à l'au moins un cylindre (26) ; et
la réduction de la durée d'ouverture de la soupape d'admission de gaz (38) lorsque la différence de temps est inférieure à un seuil prédéterminé (Th3) auquel le pré-allumage est susceptible de se produire.

2. Procédé selon la revendication 1, dans lequel la différence de temps correspond à une différence entre un angle de vilebrequin associé au début de combustion et un angle de vilebrequin associé au calage d'allumage pour l'au moins un cylindre (26).

3. Procédé selon la revendication 1 ou 2, comportant en outre :
la détermination d'une charge du moteur à gaz ou à bicarburation (10) ; et l'ajustement du seuil prédéterminé sur la base de la charge déterminée.

4. Procédé selon l'une quelconque des revendications 1 à 3, comportant en outre la réduction de la durée d'ouverture de la soupape d'admission de gaz (38) lorsque la différence de temps est inférieure au seuil prédéterminé pour un nombre prédéterminé de cycles de combustion.

5. Procédé selon l'une quelconque des revendications 1 à 4, comportant en outre la réduction de la durée d'ouverture de la soupape d'admission de gaz (38) d'une quantité qui est proportionnelle à la différence de temps.

6. Procédé selon l'une quelconque des revendications 1 à 5, comportant en outre l'augmentation progressive de la durée d'ouverture de la soupape d'admission de gaz (38) après la réduction de cette durée afin de ramener ainsi la durée d'ouverture à la durée d'ouverture précédant la réduction.

7. Procédé selon l'une quelconque des revendications 1 à 6, comportant en outre l'augmentation de la durée d'ouverture de la soupape d'admission de gaz (38) un temps prédéterminé après la réduction de cette durée ou lorsque la différence de temps est supérieure au seuil prédéterminé pour un nombre prédéterminé de cycles de combustion.

8. Procédé selon l'une quelconque des revendications 1 à 7, comportant en outre l'augmentation d'une durée d'ouverture d'au moins une autre soupape d'admission de gaz associée à au moins un autre cylindre du moteur à gaz ou à bicarburation pour compenser la réduction de puissance de l'au moins un cylindre (26).

9. Procédé selon l'une quelconque des revendications 1 à 8, dans lequel le moteur à gaz ou à bicarburation (10) comporte un injecteur pilote (90) permettant d'injecter un carburant pilote dans l'au moins un cylindre (26), et le calage d'allumage est un début d'injection par l'injecteur pilote (90).

10. Procédé selon l'une quelconque des revendications 1 à 9, dans lequel l'étape de surveillance de la caractéristique de l'au moins un cylindre (26) comporte la surveillance d'une pression de cylindre de l'au moins un cylindre (26).

11. Moteur à gaz ou à bicarburation (10) comprenant :
au moins un cylindre (26) ; et
une soupape d'admission de gaz (38) associée à l'au moins un cylindre (26) permettant de fournir un combustible gazeux à une chambre de combustion (16) de l'au moins un cylindre (26) ;
un capteur (60) associé à l'au moins un cylindre (26), le capteur (60) étant configuré pour détecter une caractéristique de l'au moins un cylindre (26) pendant le fonctionnement du moteur à gaz ou à bicarburation (10) ; et
une unité de commande (50) permettant de recevoir un résultat de détection en provenance du capteur (60),
dans lequel l'unité de commande (50) est configurée pour :
surveiller la caractéristique de l'au moins un cylindre (26) pendant le fonctionnement du moteur à gaz ou à bicarburation (10) ;
déterminer un début de combustion dans l'au moins un cylindre (26) sur la base de la caractéristique surveillée, le début de combustion étant après un calage d'allumage associé à l'au moins un cylindre (26) ;
**caractérisé en ce que** l'unité de commande est configurée pour déterminer une différence de temps entre le début de combustion dans l'au moins un cylindre (26) et le calage d'allumage associé à l'au moins un cylindre (26) ; et
réduire la durée d'ouverture de la soupape d'admission de gaz (38) lorsque la différence de temps est inférieure à un seuil prédéterminé (Th3) auquel le pré-allumage est susceptible de se produire.

12. Moteur à gaz ou à bicarburation (10) selon la revendication 11, dans lequel le capteur (60) est configuré pour détecter une pression de cylindre de l'au moins un cylindre (26), et l'unité de commande (50) est configurée pour déterminer le début de combustion dans l'au moins un cylindre (26) sur la base de la pression de cylindre détectée.

13. Moteur à gaz ou à bicarburation selon la revendication 11 ou 12, comprenant en outre un injecteur pilote (90) permettant d'injecter un carburant pilote dans la chambre de combustion (16) de l'au moins un cylindre (26), dans lequel l'unité de commande (50) est configurée pour déterminer une différence de temps entre le début déterminé de combustion et un début d'injection de carburant pilote par l'injecteur pilote (90), et réduire une durée d'ouverture de la soupape d'admission de gaz (38) lorsque la différence de temps est inférieure à un seuil prédéterminé.

14. Programme informatique comprenant des instructions exécutables par un ordinateur qui, lorsqu'elles sont exécutées sur l'unité de commande (50) du moteur (10) selon la revendication 11, amènent l'unité de commande (50) à réaliser les étapes du procédé selon l'une quelconque des revendications 1 à 10.
